# FASCICULE DE BREVET EUROPEEN

(11) **EP 0 904 253 B1**
(45) Date de publication et mention de la délivrance du brevet: **02.05.2001**
(21) Numéro de dépôt: 96941068.7
(22) Date de dépôt: 27.11.1996
(51) Int. Cl.: C02F 1/52

(54) **PROCEDE DE DESSALEMENT, DE DEMINERALISATION DE SOLUTIONS CONTENANT DES ACIDES ET/OU DES SELS METALLIQUES**
VERFAHREN ZUR ENTSALZUNG, UND DEMINERALISIERUNG VON SÄURE UND/ODER METALLSALZEN ENTHALTENDEN LÖSUNGEN
METHOD FOR DESALINATING AND DEMINERALISING SOLUTIONS CONTAINING ACIDS AND/OR METAL SALTS

(30) Priorité: 13.12.1995 FR 9514775; 03.04.1996 FR 9604195
(43) Date de publication de la demande: 31.03.1999
(73) Titulaire: DEGREMONT, 92508 Rueil-Malmaison Cédex (FR)
(72) Inventeur: JOGAND, Henri, F-92500 Rueil-Malmaison (FR); PERON, Pierre-Alain, F-78400 Chatou (FR)
(74) Mandataire: Armengaud Ainé, Alain
(86) Numéro de dépôt international: FR9601878
(87) Numéro de publication internationale: WO9721632

(56) Documents cités:
- EP-A- 0 538 026
- FR-A- 2 339 575

## Description

La présente invention concerne la réduction qualitative et quantitative de la teneur en ions précipitables, de solutions aqueuses ou autres et l'utilisation de celles-ci.

L'invention s'applique plus particulièrement au dessalement et à la déminéralisation d'eaux, notamment d'eaux potables ou d'eaux de procédé en vue de satisfaire aux contraintes de potabilité ou aux contraintes liées à l'utilisation de l'eau et au recyclage de l'eau usée dans l'industrie.

On connaît à l'heure actuelle divers procédés de dessalement ou de déminéralisation ou de cristallisation. On en rappellera ci-après les principaux procédés avec les inconvénients qui leur sont associés :
- la précipitation de sels peu solubles qui sont séparés des eaux traitées par décantation ou filtration. Ainsi, FR-A 2339 575 décrit un procédé et une installation de traitement des eaux par précipitation cristalline et décantation qui consistent à réaliser une dispersion homogène d'eau à traiter, de réactifs nécessaires à la précipitation cristalline et de boues séparées de l'eau à traiter et à opérer la décantation de cette dispersion, la réaction de précipitation cristalline se terminant pendant la décantation. L'inconvénient de cette technique connue réside dans l'utilisation de réactifs qui peuvent être très coûteux en vue de réduire leurs teneurs en sels peu solubles en-deçà de leur solubilité ;
- la percolation au-travers d'un lit de résines échangeuses d'ions qui permet de remplacer tout ou partie des ions par d'autres ions. Cette solution présente l'inconvénient d'une consommation importante de réactifs chimiques et celui de la production d'éluats de régénération salins, voire très salins ;
- la filtration sur des membranes de nano-filtration ou d'osmose inverse sélectives vis-à-vis de certains sels et qui les concentrent dans une fraction du débit traité. L'inconvénient de cette technique réside dans la production d'un concentrat de filtration qui représente une importante fraction du débit de l'eau à traiter (de l'ordre de 10 à 70% en fonction de la salinité initiale et du taux de conversion adopté) ;
- l'évaporation qui produit de l'eau déminéralisée par condensation de la vapeur produite et qui concentre la salinité dans une saumure. Cette solution entraîne une très importante consommation d'énergie et la production d'une saumure saline qui doit être, soit rejetée, soit cristallisée, cette dernière étape entraînant un coût d'investissement très élevé ;
- l'électrodialyse, mettant en jeu des membranes échangeuses d'ions qui permettent d'extraire les sels minéraux des solutions et de les concentrer dans une saumure, le flux d'eau épurée étant séparé du flux de saumure par lesdites membranes échangeuses d'ions.

La présente invention se propose d'apporter un procédé de dessalement, de déminéralisation avec possibilité de cristallisation ne présentant pas les inconvénients des solutions actuellement connues et brièvement rappelées ci-dessus.

Le procédé de dessalement et de déminéralisation selon la présente invention concerne principalement les solutés dont les solutions sont sursaturables par addition de réactifs chimiques.

Les solutés peuvent être, entre autres, des acides minéraux ou organiques ainsi que leurs sels.

En conséquence, la présente invention a pour objet un procédé de dessalement, de déminéralisation et éventuellement de cristallisation de solutions contenant des acides et/ou des sels métalliques caractérisé en ce qu'il comporte les étapes successives suivantes :
a) conditionement des solutions préalablement clarifiées, à l'aide d'un réactif chimique inhibiteur de la précipitation de sels, suivi éventuellement d'une filtration ;
b) concentration des sels dans une saumure en sursaturation, représentant une fraction du débit comprise entre 5 et 80% du débit de la solution à traiter ;
c) dans cette saumure, réduction voire élimination de l'effet de l'inhibiteur de précipitation et précipitation des sels cristallisables en sursaturation, dans la fraction concentrée.

Selon un mode de mise en oeuvre du procédé selon l'invention tel que défini ci-dessus, on peut prévoir une étape supplémentaire préalable de neutralisation consistant en une modification chimique de la solution en vue d'atteindre le produit de solubilité du ou des ions à éliminer. Selon l'invention. cette étape supplémentaire est effectuée par apport de réactifs par exemple addition de calcium, sous la forme de chlorure ou d'hydroxyde de calcium, afin de précipiter les sulfates ou les fluorures. Selon l'invention, cette étape supplémentaire préalable éventuelle de neutralisation peut être suivie ou non d'une étape de clarification.

Selon l'invention, on peut prévoir une étape supplémentaire finale consistant en un recyclage de la fraction concentrée, en tête de l'étape de clarification, avant ou après l'étape de précipitation/cristallisation des sels en sursaturation.

Selon la présente invention, les inhibiteurs de la précipitation des sels éliminés sont choisis dans le groupe comprenant les phosphonates, les polyacrylates et les polycarboxylates.

Selon un mode de mise en oeuvre du procédé selon l'invention, l'étape de déminéralisation de la solution et de concentration des sels est réalisée de préférence par filtration sur des membranes de nano-filtration ou d'osmose inverse, qui sont sélectives ou non vis à vis des ions à éliminer ou, par évaporation et/ou cristallisation et/ou dialyse et/ou électrodialyse et/ou électro-électrodialyse.

Selon l'invention, la réduction, voire l'élimination de l'effet de l'inhibiteur de précipitation peut être réalisée à l'aide d'un métal dont la valence dépend ou non de la qualité de l'inhibiteur de précipitation, notamment un métal trivalent, et/ou par augmentation du pH et/ou par augmentation de la température et/ou par l'action d'un oxydant chimique et/ou par l'action de tout autre additif chimique, minéral ou organique, permettant de neutraliser, en totalité ou en partie, l'activité de l'inhibiteur de précipitation.

A titre d'exemple non limitatif, on a donné ci-après des résultats obtenus expérimentalement lors de la mise en oeuvre du procédé selon l'invention. à une échelle semi-industrielle. Les effluents traités lors de cette mise en oeuvre étaient des eaux provenant de l'industrie minière. Dans cet exemple de mise en oeuvre dépourvu de tout caractère limitatif, on a combiné un conditionnement des eaux saturées en sulfate de calcium avec un polyacrylate, une filtration sur membrane de nano-filtration et une destruction du polyacrylate avec un sel de fer ferrique.

L'eau brute de départ présentait les caractéristiques ci-après :
- conductivité : 7 µS/cm
- calcium : 725 mg/l
- sulfates : 2 200 mg/l
- turbidité : 0,25 NTU
- pH : 7,9

Cette eau a été conditionnée à l'aide d'un inhibiteur de précipitation du sulfate de calcium constitué de 2,5 mg/l de polyacrylate.

L'eau ainsi conditionnée a été ensuite filtrée sur membrane de nano-filtration (pression de fonctionnement 7 bars ; taux de conversion : 66%).

Les caractéristiques du perméat et du concentrat obtenus étaient respectivement les suivantes :
- *perméat:*
   - débit : 66 % du débit d'alimentation
   - conductivité : 5 µS/cm
   - sulfates: 100 mg/l
   - turbidité: 0,2 NTU
- *concentrat*
   - débit : 34% du débit d'alimentation
   - conductivité : 12,5 µS/cm
   - calcium : 2 150 mg/l
   - sulfates : 6 600 mg/l
   - turbidité : 0,35 NTU

La réduction, voire la suppression de l'effet inhibiteur de précipitation du polyacrylate a été réalisée à l'aide de 16 mg/l de fer ferrique dans le concentrat. Après une heure d'auto-cristallisation, la teneur en polymère soluble était inférieure au seuil de détection de la méthode d'analyse soit 0,2 mg/l. la teneur en sulfate de calcium soluble était voisine, à 5% près, de la solubilité théorique du sulfate de calcium.

A titre d'illustration non limitative, on a représenté de façon schématique sur les dessins annexés deux exemples de réalisation d'installations mettant en oeuvre le procédé selon la présente invention.

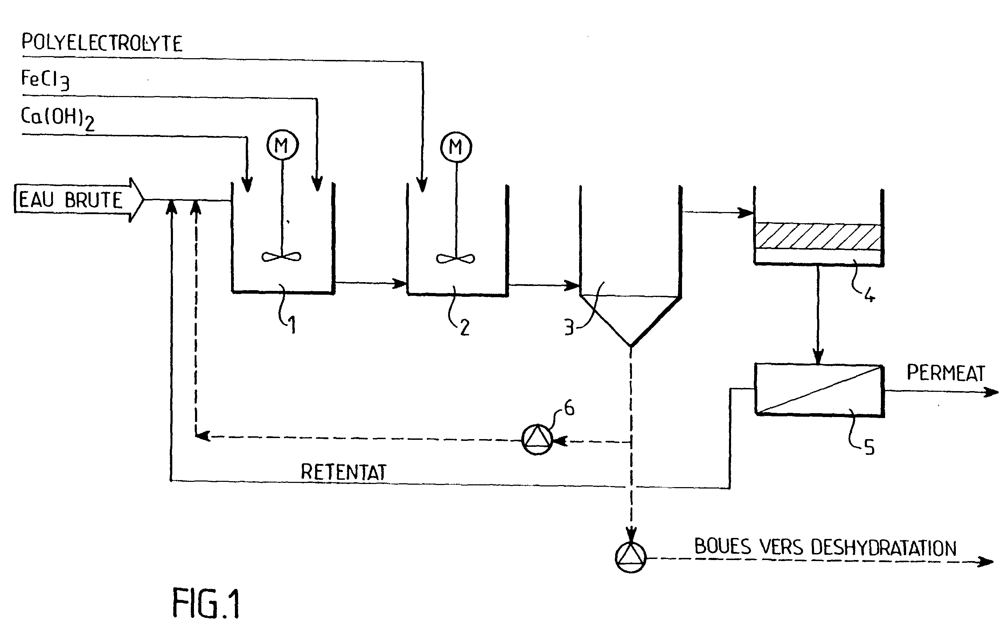

La figure 1 se réfère à une installation de désulfatation en circuit fermé avec recyclage du concentrat de l'étape de nano-filtration.

Sur cette figure 1, on voit que l'eau à traiter subit préalablement en 1, un traitement de neutralisation-précipitation avec apport de composés calciques (Ca(OH)2, CaCl2), suivi d'une floculation en 2 puis d'une décantation en 3. (dans cet exemple de réalisation, on peut utiliser un décanteur lamellaire). Dans ce dispositif, une partie des boues est recyclée en tête de l'installation, le reste étant soumis à une étape de déshydratation comme indiqué sur cette figure 1. L'eau clarifiée est conditionnée par l'inhibiteur de précipitation du sulfate de calcium avant d'être filtrée par exemple sur un filtre à sable 4. L'étape de désulfatation de l'eau et de concentration des sels en sulfate est effectuée ici sur membrane de nano-filtration 5. Le perméat est ensuite évacué et le concentrat est recyclé en tête du procédé, comme on l'a indiqué sur la figure 1. La cristallisation des sels en sursaturation dans le concentrat est favorisée grâce au mélange des cristaux du décanteur avec le concentrat, par exemple par l'intermédiaire d'un hydroéjecteur, utilisant ainsi l'énergie disponible sur le concentrat.

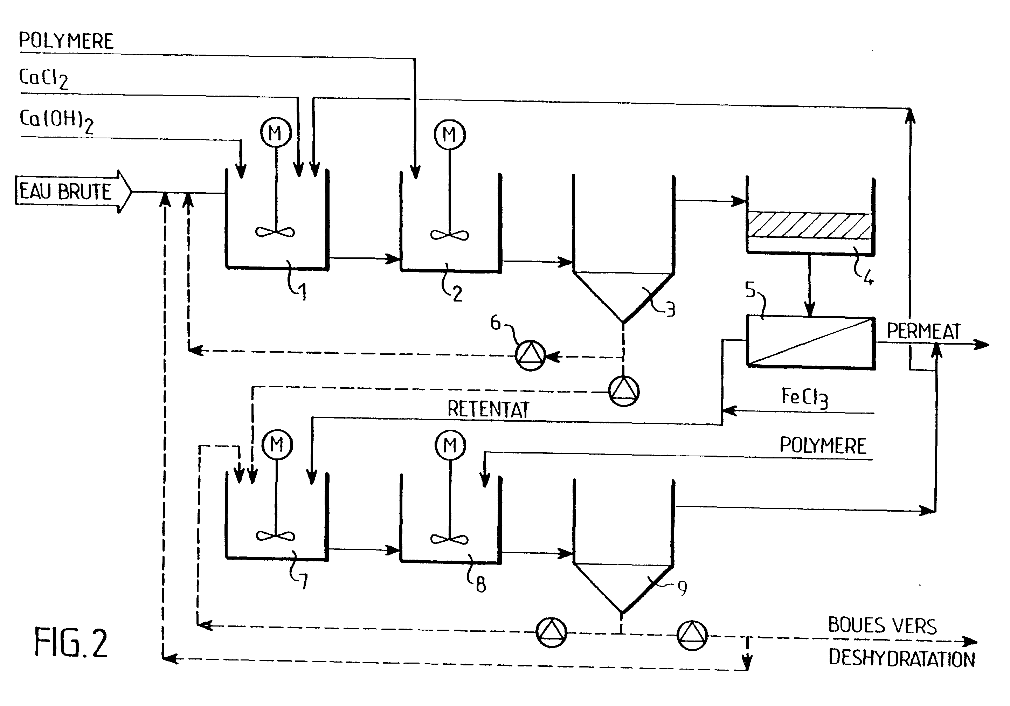

La figure 2 se réfère à une installation de désulfatation fonctionnant en circuit ouvert et/ou semi-ouvert, avec traitement indépendant et rejet total ou partiel du concentrat de la nano-filtration.

Sur cette figure 2, on retrouve la même installation que celle décrite ci-dessus, en référence à la figure 1, la différence étant que le concentrat de la nano-filtration subit un traitement de cristallisation-coagulation en 7 puis une floculation en 8 et enfin une décantation en 9, l'eau saturée en sulfate de calcium étant ensuite évacuée.

Parmi les avantages du procédé objet de la présente invention, on peut citer notamment les suivants :
- faible coût d'exploitation en réactifs (sels de calcium, chlorure ou hydroxyde de calcium, inhibiteur de précipitation de sels, sel métallique),
- élimination d'anions tels que sulfates, phosphates, carbonates, fluorures et de la silice, sous la forme de précipités de sels métalliques ou d'hydroxydes pouvant être facilement déshydratés (cette liste n'étant pas limitative),
- élimination de cations tels que calcium, strontium, baryum et autres métaux lourds sous forme de sels métalliques simples ou complexes, ou sous forme d'hydroxydes,
- possibilité de produire un débit d'eau traitée (taux de conversion) voisin de 100% du débit d'eau brute (la différence provenant de l'eau évacuée avec les précipités métalliques).

Il demeure bien entendu que la présente invention n'est pas limitée aux exemples de mise en oeuvre ou de réalisation décrits et/ou représentés ici mais qu'elle en englobe toutes les variantes.

## Revendications

1. Procédé de dessalement, de déminéralisation et éventuellement de cristallisation de solutions contenant des acides et/ou des sels métalliques caractérisé en ce qu'il comporte les étapes successives suivantes :
a) conditionement des solutions préalablement clarifiées, à l'aide d'un réactif chimique inhibiteur de la précipitation de sels, suivi éventuellement d'une filtration (4);
b) concentration des sels dans une saumure en sursaturation, représentant une fraction du débit comprise entre 5 et 80% du débit de la solution à traiter (5);
c) dans cette saumure, réduction voire élimination de l'effet de l'inhibiteur de précipitation et précipitation des sels cristallisables en sursaturation, dans la fraction concentrée.

2. Procédé selon la revendication 1 caractérisé en ce qu'il comporte une étape supplémentaire préalable consistant en une neutralisation (1) par apport de réactifs en vue d'atteindre le produit de solubilité des solutés à précipiter, cette neutralisation pouvant être éventuellement suivie d'une étape de clarification (2, 3).

3. Procédé selon l'une des revendications 1 ou 2 caractérisé en ce qu'il comporte une étape supplémentaire finale consistant en un recyclage de la fraction concentrée, en tête de l'étape de clarification, avant ou après l'étape de précipitation/cristallisation des solutés (5).

4. Procédé selon l'une quelconque des revendications précédentes caractérisé en ce que l'inhibiteur de la précipitation des solutés est choisi dans le groupe comprenant les phosphonates, les polyacrylates et les polycarboxylates.

5. Procédé selon l'une quelconque des revendications précédentes caractérisé en ce que l'étape (5) de déminéralisation et de concentration des solutés est réalisée par filtration sur des membranes de nano-filtration ou d'osmose inverse, pouvant être sélectives ou non vis-à-vis des ions à éliminer.

6. Procédé selon l'une quelconque des revendications 1 à 4 caractérisé en ce que l'étape (5) de déminéralisation et de concentration des solutés est réalisée par évaporation et/ou cristallisation et/ou dialyse et/ou électrodialyse et/ou électro-électrodialyse.

7. Procédé selon l'une quelconque des revendications précédentes caractérisé en ce que la réduction voire l'élimination de l'effet de l'inhibiteur de précipitation est réalisée à l'aide d'un métal dont la valence dépend ou non de la qualité de l'inhibiteur de précipitation.

8. Procédé selon la revendication 7 caractérisé en ce que la réduction voire l'élimination de l'effet de l'inhibiteur de précipitation est réalisée à l'aide d'un métal trivalent.

9. Procédé selon l'une quelconque des revendications 1 à 6 caractérisé en ce que la réduction voire l'élimination de l'effet de l'inhibiteur de précipitation est réalisée par augmentation du pH.

10. Procédé selon l'une quelconque des revendications 1 à 6 caractérisé en ce que la réduction voire l'élimintation de l'effet de l'inhibiteur de précipitation est obtenue par une augmentation de la température.

11. Procédé selon l'une quelconque des revendications 1 à 6 caractérisé en ce que la réduction voire l'élimination de l'effet de l'inhibiteur de précipitation est réalisée par l'action d'un oxydant chimique et/ou de tout additif chimique, minéral ou organique capable de neutraliser en totalité ou en partie l'activité de l'inhibiteur de précipitation.

## Claims

1. Process for the desalination, demineralization and optionally crystallization of solutions containing acids and/or metal salts, characterized in that it comprises the following, successive stages:
a) conditioning preclarified solutions with the aid of a chemical reagent inhibiting the precipitation of salts, optionally followed by a filtration operation (4),
b) concentration of the salts in a supersaturated brine, representing a fraction of the flow between 5 and 80% of the flow of the solution to be treated (5),
c) in said brine, reduction or elimination of the effect of the precipitation inhibitor and precipitation of the supersaturated, crystallizable salts in the concentrated fraction.

2. Process according to claim 1, characterized in that it comprises a supplementary, prior stage consisting of a neutralization (1) by the supply of reagents for reaching the solubility product of the solutes to be precipitated, whereby said neutralization can be optionally followed by a clarification stage (2, 3).

3. Process according to either of the claims 1 and 2, characterized in that it comprises a supplementary, final stage consisting of a recycling of the concentrated fraction, at the head of the clarification stage, before or after the solute precipitation/crystallization stage (5).

4. Process according to any one of the preceding claims, characterized in that the inhibitor of the precipitation of the solutes is chosen from within the group including phosphonates, polyacrylates and polycarboxylates.

5. Process according to any one of the preceding claims, characterized in that the stage (5) of demineralizing and concentrating solutes is performed by filtration on reverse osmosis or nanofiltration membranes, which may or may not be selective with respect to the ions to be eliminated.

6. Process according to any one of the claims 1 to 4, characterized in that the stage (5) of demineralizing and concentrating the solutes is performed by evaporation and/or crystallization and/or dialysis and/or electrodialysis and/or electro-electrodialysis.

7. Process according to any one of the preceding claims, characterized in that the reduction or elimination of the effect of the precipitation inhibitor is carried out with the aid of a metal, whose valency may or may not depend on the quality of the precipitation inhibitor.

8. Process according to claim 7, characterized in that the reduction or elimination of the effect of the precipitation inhibitor is brought about with the aid of a trivalent metal.

9. Process according to any one of the claims 1 to 6, characterized in that the reduction or elimination of the effect of the precipitation inhibitor is brought about by increasing the pH-value.

10. Process according to any one of the claims 1 to 6, characterized in that the reduction or elimination of the effect of the precipitation inhibitor is obtained by increasing the temperature.

11. Process according to any one of the claims I to 6, characterized in that the reduction or elimination of the effect of the precipitation inhibitor is brought about by the action of a chemical oxidant and/or any chemical, mineral or organic additive able to completely or partly neutralize the activity of the precipitation inhibitor.

## Patentansprüche

1. Verfahren zum Entsalzen, Entmineralisieren und gegebenenfalls Auskristallisieren von Säuren und/oder Metallsalze enthaltenden Lösungen, **dadurch gekennzeichnet, daß** es die aufeinanderfolgenden Stufen umfaßt:
a) Behandlung der zuvor gereinigten Lösungen mit einem chemischen Inhibierungsreagens für die Ausfällung von Salzen, gegebenenfalls mit anschließender Filtration (4),
b) Aufkonzentrierung der Salze zu einer übersättigten Salzlösung, die einen Anteil von 5 bis 80 % des Durchsatzes der zu behandelnden Lösung (5) ausmacht, und
c) Vermindern, wenn nicht sogar Ausschalten des die Ausfällung hemmenden Effekts in dieser Salzlösung und Ausfällung der übersättigt vorliegenden auskristallisierbaren Salze aus dem aufkonzentrierten Anteil.

2. Verfahren nach Anspruch 1, **dadurch gekennzeichnet, daß** es eine zusätzliche Vorstufe umfaßt, die aus einer Neutralisation (1) durch den Zusatz von Reagentien besteht, um das Löslichkeitsprodukt des auszufällenden Gelösten zu erreichen, wobei auf diese Neutralisation gegebenenfalls eine Reinigungsstufe (2, 3) folgen kann.

3. Verfahren nach Anspruch 1 oder 2, **dadurch gekennzeichnet, daß** es eine zusätzliche Endstufe umfaßt, die aus einer Rezirkulierung des aufkonzentrierten Anteils an den Beginn der Reinigungsstufe vor oder nach der Stufe (5) der Ausfällung/Auskristallisierung des Gelösten besteht.

4. Verfahren nach einem der vorhergehenden Ansprüche, **dadurch gekennzeichnet, daß** der Inhibitor für die Ausfällung des Gelösten aus der Gruppe ausgewählt ist, welche die Phosphonate, Polyacrylate und Polycarboxylate umfaßt.

5. Verfahren nach einem der vorhergehenden Ansprüche, **dadurch gekennzeichnet, daß** die Stufe (5) der Entmineralisation und Aufkonzentrierung des Gelösten mittels Filtration durch Ultrafiltrations- oder Umkehrosmosemembranen realisiert wird, die gegebenenfalls gegenüber den zu entfernenden Ionen selektiv sein können.

6. Verfahren nach einem der Ansprüche 1 bis 4, **dadurch gekennzeichnet, daß** die Stufe (5) der Entmineralisation und Aufkonzentrierung des Gelösten durch Eindampfen und/oder Auskristallisation und/oder Dialyse und/oder Elektrodialyse und/oder Elektro-Elektrodialyse realisiert wird.

7. Verfahren nach einem der vorhergehenden Ansprüche, **dadurch gekennzeichnet, daß** die Verminderung, wenn nicht sogar Ausschaltung des die Ausfällung hemmenden Effekts mittels eines Metalls durchgeführt wird, dessen Wertigkeit gegebenenfalls von den Eigenschaften des Fällungsinhibitors abhängig ist.

8. Verfahren nach Anspruch 7, **dadurch gekennzeichnet, daß** die Verminderung, wenn nicht sogar Ausschaltung des die Ausfällung hemmenden Effekts mittels eines dreiwertigen Metalls durchgeführt wird.

9. Verfahren nach einem der Ansprüche 1 bis 6, **dadurch gekennzeichnet, daß** die Verminderung, wenn nicht sogar Ausschaltung des die Ausfällung hemmenden Effekts mittels pH-Wert-Erhöhung durchgeführt wird.

10. Verfahren nach einem der Ansprüche 1 bis 6, **dadurch gekennzeichnet, daß** die Verminderung, wenn nicht sogar Ausschaltung des die Ausfällung hemmenden Effekts mittels Temperaturerhöhung durchgeführt wird.

11. Verfahren nach einem der Ansprüche 1 bis 6, **dadurch gekennzeichnet, daß** die Verminderung, wenn nicht sogar Ausschaltung des die Ausfällung hemmenden Effekts mittels Einwirkung eines chemischen Oxidationsmittels und/oder eines beliebigen mineralischen oder organischen chemischen Zusatzstoffs durchgeführt wird, der in der Lage ist, die Aktivität des Fällungsinhibitors ganz oder teilweise aufzuheben.
